# EUROPEAN PATENT APPLICATION

(11) **EP 1 748 662 A1**
(43) Date of publication of application: **31.01.2007**
(21) Application number: 05291588.1
(22) Date of filing: 25.07.2005
(51) Int. Cl.: H04Q 7/34, H04M 15/00, H04L 12/14

(54) **Mobile network performance evaluation system and method**

(71) Applicant: Orange S.A., 75505 Paris Cédex 15 (FR)
(72) Inventor: Balon, Marc, 1495 Villers-La-Ville (BE); Jamaleddine, Khaled, 75017 Paris (FR)
(74) Representative: DeVile, Jonathan Mark

(57) **Abstract**

A data processing apparatus is operable to evaluate an inter-mobile network performance of a plurality of mobile access networks. The plurality of mobile access networks includes a home mobile access network and a visited mobile access network to which mobile subscribers may attach. The data processing apparatus is operable to receive signalling messages communicated between network components of the plurality of mobile radio networks in association with a communications session involving the mobile subscriber. The signalling messages are generated in accordance with a signalling event associated with the communications session and comprising one of billing information elements associated with generating a charge to the mobile subscriber for the communications session, access information elements communicated between access network components of the mobile access network, and core information elements associated with the core network components of the mobile access network. The data processing apparatus is operable to correlate selectively one of the billing information elements, the access information elements or the core information elements, to evaluate the inter-mobile access network performance in accordance with a result of the correlation. Accordingly, by correlating and comparing information from a transferred account procedure message, which could be unreliable, and signalling obtained directly from the network itself which corresponds to the transferred account procedure message, it is possible to verify the validity of the transferred account procedure message.

## Description

### Field of the Invention

The present invention relates to mobile network performance evaluation systems and methods.

### Background of the Invention

When a mobile subscriber establishes a communication session, several mobile access networks may be involved in communicating signalling data and service data to establish and communicate data during the communications session. This may depend on the location of the mobile subscriber, with respect to the subscriber's home network. If a mobile subscriber has roamed to another mobile access network, which is referred to as a visited network, then both signalling data and service data may be communicated via more than one network to and from the subscriber's home network. This may depend on a location of a correspondent mobile subscriber which may also take part in the communications session. The different networks involved in these communications can be considered as the visited network, where the subscriber is located, the destination or origin network, where the communication is going to or coming from, the transit network, where the signalling and information is transiting, and the home network of the subscriber.

As will be appreciated, although an operator of the home network has control of the mobile subscriber's home mobile access network, the visited network is outside the operator's control, and the operator is reliant on operators of any mobile access network which is visited by its subscribers for various signalling and other information related to the subscriber's communications.

### Summary of Invention

According to an aspect of the present invention there is provided a data processing apparatus operable to evaluate an inter-mobile network performance of a plurality of mobile access networks. The plurality of mobile access networks includes a home mobile access network and a visited mobile access network to which mobile subscribers may attach. The data processing apparatus is operable to receive signalling messages communicated between network components of the plurality of mobile radio networks in association with a communications session involving the mobile subscriber. The signalling messages are generated in accordance with a signalling event associated with the communications session and comprising one of billing information elements associated with generating a charge to the mobile subscriber for the communications session, access information elements communicated between access network components of the mobile access network, and core information elements associated with the core network components of the mobile access network. The data processing apparatus is operable to correlate selectively one of the billing information elements, the access information elements or the core information elements, to evaluate the inter-mobile access network performance in accordance with a result of the correlation.

The present invention provides a data processing apparatus, which is arranged to perform an inter-mobile access network performance evaluation by correlating signalling messages produced within a plurality of mobile access networks. The plurality of mobile access networks includes a home mobile access network, a visited mobile access network of a mobile subscriber. The signalling messages are produced as a result of a communications session and include core network information elements, access network information elements and billing information elements. Typically the core network information elements, the access network information elements and the billing information elements are generated in accordance with an SS7 signalling protocol. The inter-mobile network performance is determined by correlating one of the core network information elements, the access network information elements and the billing information elements. As such various performance analyses can be performed which may be otherwise not accessible to an operator of one of the mobile access networks. These are:
- Revenue assurance that a transferred account procedure file providing information on a cost of a communications session which a mobile subscriber's home operator is charged is correct
- End to end communication tracking of a communications session
- A comparative roaming analysis, including testing end to end validation of roaming agreements
- Detecting faults in network components

In one example the billing information elements may include transferred account procedure messages providing data for billing the communications session to the home mobile access network, and resource information messages. The resource information messages may indicate an amount of communications resources used on one or more of the mobile radio networks, an identifier of the mobile subscriber, which has used the communications resources, and an indication of the relative cost of the communications resources used. The data processing apparatus is operable to correlate the transferred account procedure messages with the resource information messages to confirm that the billing information indicating the amount of the charge to the identified mobile subscriber for the communications session indicated by the transferred account procedure messages is correct with respect to that represented to the resource information messages.

Various further aspects and features of the present inventions are defined in the appended claims and include a method of evaluating an inter-mobile network performance.

### Brief Description of the Drawings

Embodiments of the present invention will now be described by way of example only with reference to the accompanying drawings where like parts are provided with corresponding reference numerals and in which:
Figure 1 schematically illustrates a network monitoring apparatus attached to multiple networks in accordance with an embodiment of the invention;
Figure 2 schematically illustrates monitoring of a home and visited network of a mobile subscriber to validate a billing procedure in accordance with an embodiment of the invention;
Figure 3 schematically illustrates a method of validating a billing procedure in accordance with the embodiment of Figure 2;
Figure 4 schematically illustrates an end-to-end communication tracking arrangement in accordance with an embodiment of the invention; and
Figure 5 schematically illustrates a comparative roaming analysis arrangement in accordance with an embodiment of the invention.

### Description of the Example Embodiments

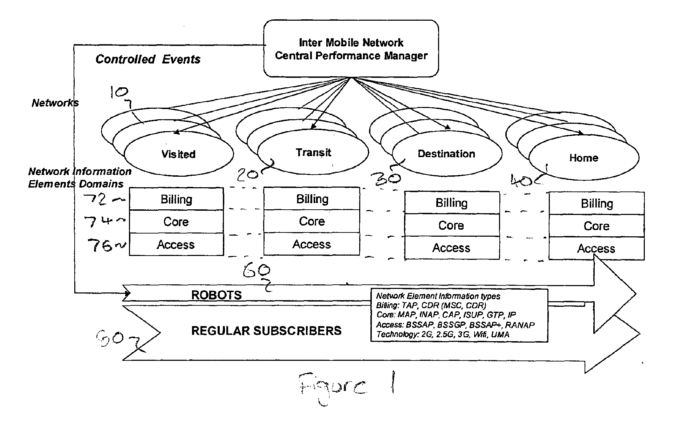

Referring to Figure 1, different networks involved in communications to and from a mobile subscriber may include a visited network 10, where the subscriber is located, a destination or origin network 30, where the communication is going to or coming from, a transit network 20, where the signalling and information is transiting, and a home network 40 of the mobile subscriber. A subscriber activity, such as a control function or a communication function, may generate a particular number of transactions in the involved networks. Transactions may be generated by various network elements in the networks, and could be logged by probes, or generated by the network elements themselves. Access to these transactions may be possible through exchange of information among networks or through a centralised information system, provided a mechanism of exchange were to be provided in accordance with agreements put in place between the network operators. These logged transactions are referred to as information elements and may be obtained from several networks. Subscriber activity, referred to herein as an event, may be generated by regular subscribers 50, or by controlled robots 60 within the network. An event could represent one or a group of several transactions.

Three main domains of network information elements can be defined. These are billing information elements 72, core information elements 74 and access information elements 76. Billing information elements 72 may be generated by various network entities, such as a Mobile Switching Centre (MSC) or a Service Control Point (SCP), and are intended to measure the duration or the quantity of information exchanged during a communication. The billing information element 72 may contain various information, such as the identity of the subscriber, the type of equipment being used, the type of service requested, the origin and the destination of the communication, the location of the subscriber, the duration of the call or the quantity of data exchanged. An example billing information element 72 could be SCP Call Data Record (CDR), an MSC CDR or a Transferred Account Procedure (TAP) file.

Core information elements 74 are generated by core network elements such as an MSC, SCP, Visitor Location Register (VLR), Home Location Register (HLR), Serving GPRS Support Node (SGSN) and Gateway GPRS Support Node (GGSN). The core information elements 74 may cover a wide range of Signalling System 7 (SS7) protocols and associated messages (for example Mobile Application Part (MAP), Customised Application for Mobile network Enhanced Logic (CAMEL) Application Part (CAP), Intelligent Network Application Part (INAP) and Integrated Services Digital Network (ISDN) User Part (ISUP)) related to signalling used during any communication establishment and may contain various information such as the identity of the subscriber, the type of services subscribed, requested and allocated, the destination and origin of the communication, the network element addresses involved, the duration and quantity of data exchanged, and any error messages. The core information elements 74 could be obtained by probes, or from network elements databases. An alternative way of capturing SS7 data is to collect such information at the SS7 carrier level.

Access information elements 76 are generated by the access network elements, for example Node B, Radio Network Controller (RNC), Base Transceiver Station (BTS), Base Station Controller (BSC), and Packet Control Unit (PCU). The access information elements 76 may cover a range of SS7 protocols and associated messages such as Base Station System Application Part (BSSAP), Base Station System GPRS Protocol (BSSGP) and Radio Access Network Application Part (RANAP). These messages may be used to control resources and access during the establishment of communications, and may contain various information such as the identity of the subscriber, the type of service subscribed to, requested and allocated, the destination and origin of the communication, the access network element involved, the duration and the quantity of data exchanged, the quality of the communication, and any errors encountered. Access may also include non GSM (Global System for Mobile communication)/UMTS (Universal Mobile Telecommunications System)/CDMA (Code Division Multiple Access) technologies such as Wireless Fidelity (WIFI) and (Unlicensed Mobile Access) UMA.

### Correlation of Information elements

Once the information elements have been collected, they may be grouped into one database, where correlations may be performed between the various information elements. For a given communication, all or part of the information elements could be available, depending on the agreement between mobile networks, the availability of the technology and the collection means. A correlation could be performed between two or several information elements from one or more networks and belonging to one or more domains.

### Intra-domain correlation

Intra-domain correlation may be used to follow up a subscriber activity in one or more networks. For instance, a mobile originating call initiated by a prepaid subscriber may generate several SS7 messages from MAP, CAP, INAP and ISUP protocols and could involve signalling across several networks. This type of call could be represented by a core intra-domain correlation grouping together all types of signalling involved from end-to-end. On the other hand, this call may generate on the access part of the network several information elements that could be grouped together. Finally, network elements in the core network, such as the SCP and the MSC, create transactions converted to billing information elements.

Different analysis needs can be met by correlating different information elements. For example, fraud could be detected by measuring the communication duration or the exchanged data, using real time signalling on the core or access interfaces. Alarms could be triggered in response to excessive usage from a subscriber or a ranged of subscribers for a specific service or various services.

For example, the events may be mobile originating calls, mobile terminating calls and location update. A subscriber A is a prepaid GSM subscriber (home PLMN = HPLMN-A), is visiting a GSM network (visited PLMN=VPLMN-X) and makes a call to a subscriber B (home PLMN=HPLMN-B) which is visiting another HPLM (visited PLMN=VPLMN-Y). In this type of call, the following messages may be generated, as shown in Table 1.

**Table 1**

| **Network** | **Information Element Core Domain** |
|---|---|
| HPLMN-A | CAP IDP, MAP Authentication, MAP Location Update |
| VPLMN-X | CAP IDP, MAP Authentication, MAP Location Update, ISUP IAM |
| HPLMN-B | MAP Provide Roaming Number |
| VPLMN-Y | MAP Provide Roaming Number, ISUP IAM |
| | Information Element Access Domain |
| HPLMN-A | - |
| VPLMN-X | BSSAP Service Request, Authentication, Cipher Mode, Setup, Assignment Request/Confirm, alerting, Connect, Disconnect |
| HPLMN-B | - |
| VPLMN-Y | Paging Response, Authentication, Cipher Mode, Setup, Assignment Request/Confirm, alerting, Connect, Disconnect |
| | Information Element Billing Domain |
| HPLMN-A | SCP CDR |
| VPLMN-X | MSC CDR, TAP |
| HPLMN-B | SCP CDR (not mandatory) |
| VPLMN-Y | MSC CDR, TAP |

This transaction could for instance lead to the following correlations, as shown in Table 2:

**Table 2**

| | Information Elements |
|---|---|
| Billing, Core | TAP/CDR, CAP IDP/ISUP IAM |
| Billing, Access | TAP/CDR, Connect/Disconnect |
| Core, Access | MAP Location Update, BSSAP Location Update, CAP IDP, Connect/Disconnect |
| Billing, Core, Access | TAP/CDR, CAP IDP/ISUP IAM, Connect/Disconnect |

### Example applications

### Revenue assurance

Revenues are mainly linked to billing information elements, for example TAP and CDR. Some of these information elements are processed through complex chains and by third parties leading to inaccurate or false billing and thereby loss of revenue. Correlating billing information with core and access information elements makes it possible to correct billing content providing better service to the subscriber and increasing revenues. Correlation with data provided by a robot could be carried out, based on robot information or based on access or core network information elements.

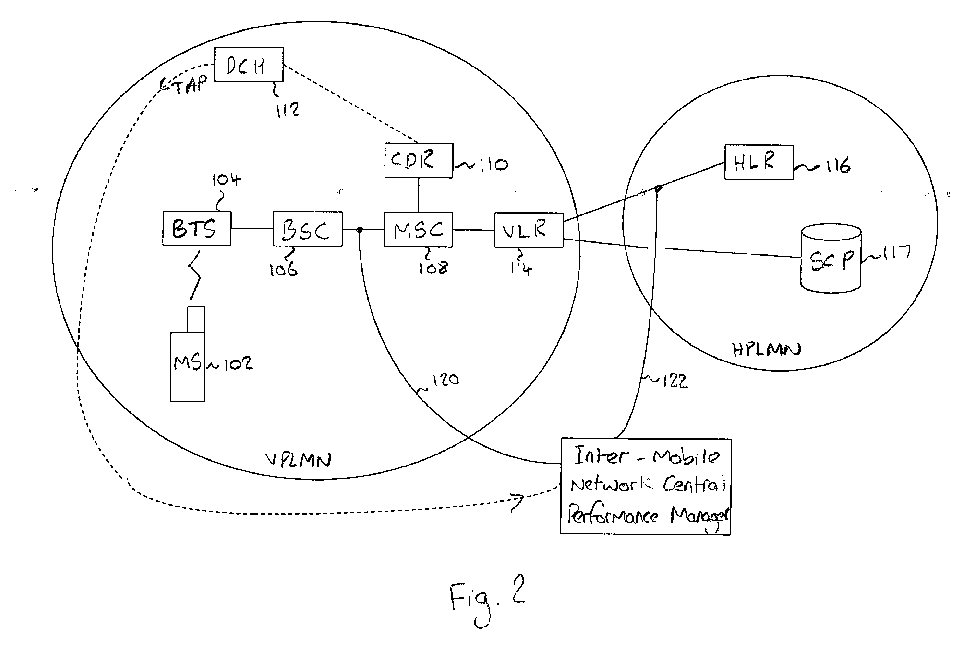

Figure 2 schematically illustrates a monitored network arrangement in accordance with an embodiment of the invention. A mobile subscriber (MS) 102 is currently visiting and affiliated with a VPLMN. The Mobile Subscriber 102 is in radio communication with the VPLMN via a Base Transceiver Station (BTS) 104. Communications between the Mobile Subscriber 102 and the VPLMN are carried out under the control of a Base Station Controller (BSC) 106. A Mobile Switching Centre (MSC) 108 is also provided and operates to exchange information with location databases such as the Visitor Location Register (VLR) 114 of the VPLMN. The VLR 114 is operable to communicate subscriber data to and from a Home Location Register (HLR) 116 of the mobile subscriber 102 in the HPLMN of the mobile subscriber 102. The MSC is also operable to communicate with a Service Control Point (SCP) 117 which generates Call Detail Record data in respect of the HPLMN for a communications session involving the mobile subscriber 102.

The MSC 108 communicates with a Call Detail Record (CDR) Unit 110 which generates a Call Detail Record which includes billing information. In particular, the CDR may contain details such as the called and calling parties, originating switch, terminating switch, call length, and time of day. The Call Detail Record is then passed to an external party, known as a Data Clearing House (DCH) 112 which generates a Transferred Account Procedure (TAP) file.

An inter mobile network central performance manager 118 is also provided which is arranged to receive the TAP file generated by the Data Clearing House 112. The inter mobile network central performance manager 118 may be positioned within the HPLMN, the VPLMN or anywhere else, and is provided with a probe 120 which determines the signalling between the Base Station Controller 106 and the Mobile Switching Centre 108. A second probe 122 is provided which determines the signalling between the Visitor Location Register 114 and the Home Location Register 116 of the Mobile Subscriber 102. The inter mobile network central performance manager 118 is operable to compare, in respect of a given transaction, the TAP information received from the Data Clearing House 112 and the signalling information extracted by the probes 120, 122 from the network. By comparing information from these two sources, it is possible to check that the billing information specified in the TAP file is correct.

The TAP file contains billing information for a roaming subscriber, the billing information including at least some of a duration of the communications session, a volume of data transferred via the communications session, a type of the communications session, and an identification of the subscriber and the communications session. Signalling information collected by the probes may include similar information to that contained within the TAP file. For instance, a call start time and a call stop time could be determined from the signalling, and used to confirm that the call duration specified in the TAP file was correct.

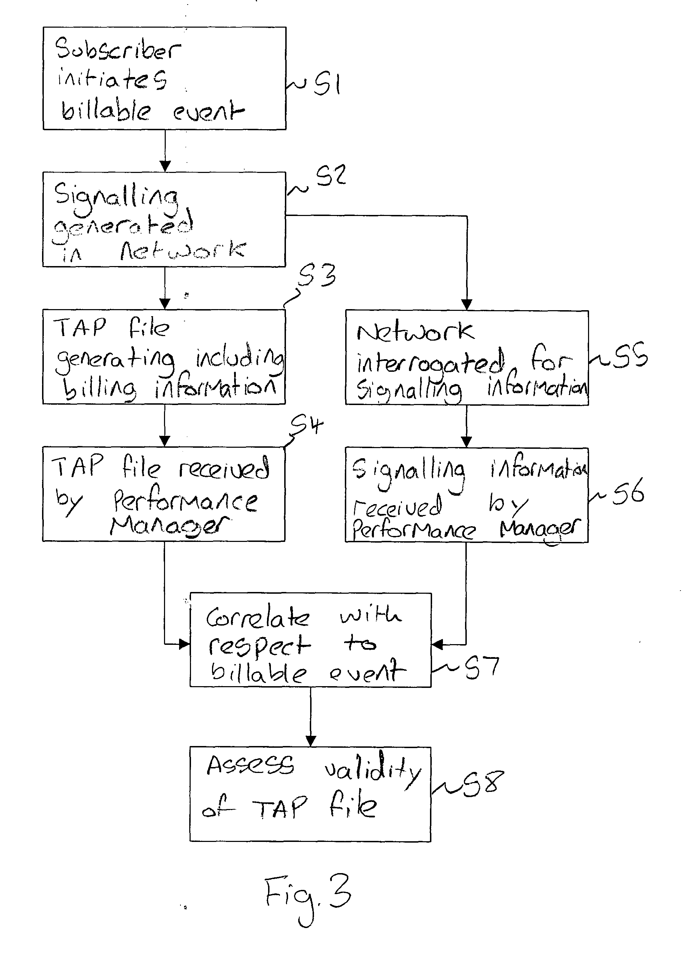

Figure 3 schematically illustrates a monitoring method in accordance with an embodiment of the invention. At a step S1, a mobile subscriber within a visited network initiates a billable event, for instance by initiating a voice call. In response to the initiation of the billable event, signalling will be generated, at a step S2, within the network, and within other networks involved in the communications session required by the billable event. Billing information relating to the billable event and the corresponding communications session will be generated by the network and passed to an external provider, such as a Data Clearing House (DCH) where it will be formatted as a Transferred Account Procedure (TAP) file at a step S3. An inter mobile network central performance manager will receive the TAP file at a step S4 and, at a step S5, use probes to interrogate the signalling within the relevant networks to determine billing related information concerning the communications session directly. This signalling information will be received by the inter mobile network central performance manager at a step S6.

At a step S7, the inter mobile network central performance manager will correlate TAP files with signalling information received from the probes with respect to particular billable events and communications sessions to provide a correspondence between each TAP file and related signalling information from the networks. Finally, at a step S8, the inter mobile network central performance manager will compare the content of the TAP file with the signalling information from the networks to determine the validity of the TAP file.

### Network elements indicators validation

When a new network element is installed, for instance due to technology upgrades, the embedded counters may not be accurate. The aggregation of SS7 core messages could be compared with HLR, VLR, MSC or SCP counters, where the aggregation of SS7 access messages could be compared to BSC, BTS Node B or RNC counters.

### End to end communication tracking

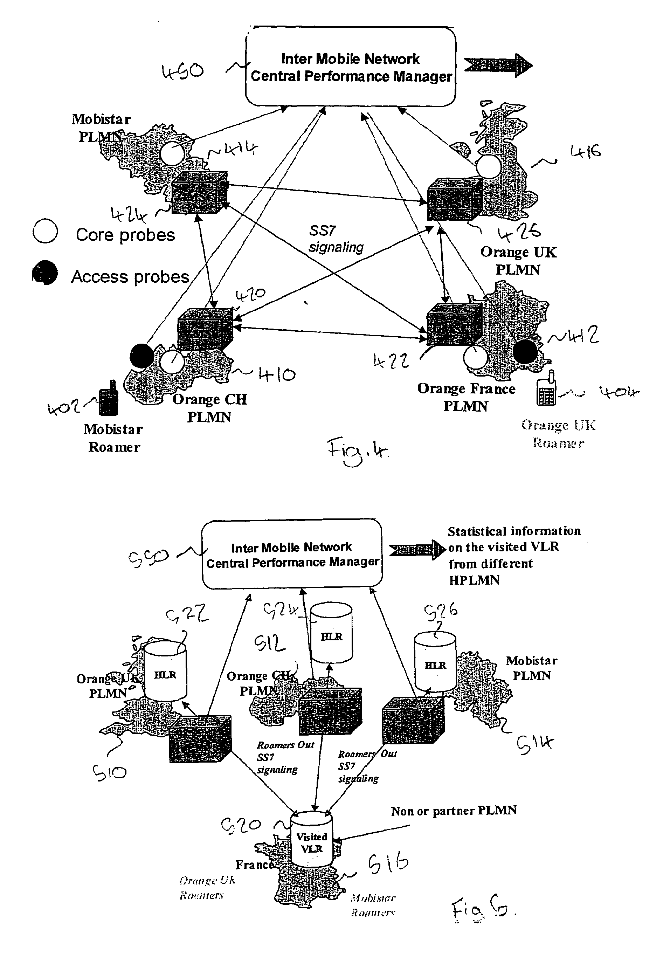

Referring to Figure 4, when a roamer 402 currently visiting a first network 410 calls another roamer 404 currently visiting a second network 412, four or more networks may be involved in this communication. In particular, in addition to the first network 410 and the second network 412, a third network 414, being the home network of the roamer 402 and a fourth network 416, being the home network of the roamer 404 will also be involved. Signalling information may be exchanged between each of these networks via Gateway Mobile Switching Centres 420, 422, 424 and 426 associated with each of the networks 410, 412, 414 and 416 respectively. If these networks are also connected to an inter mobile network central performance manager 450, they could share valuable information regarding the communications session between the two roamers, which could be used to improve the performance of the networks. Information elements generated in these networks from different domains could be correlated to provide performance on a per call basis, or per category of user or service basis. This could provide an inter PLMN service quality management function which could enable the operator to guarantee a quality of service independent of the visited network.

### Comparative roaming analysis

Referring to Figure 5, a comparative view of multiple networks is valuable for mobile network operators because it may enable them to improve their service to increase their market share using an active comparison within their marketing advertisements. In Figure 5, mobile subscribers from a first home network 510, a second home network 512 and a third home network 514 are each roaming to the same visited network 516. SS7 signalling passes between a VLR 520 in the visited network 516 and HLRs 522, 524 and 526 in each of the home networks 510, 512 and 514 respectively. An inter mobile network central performance manager 550 is operable to receive SS7 signalling data from each of the home networks 510, 512, 514 and to thereby generate statistical information regarding the visited VLR 520. The inter mobile network central performance manager may permit this application by providing a comparative view from different networks on the one hand, and by allowing a partner network operator to have a comprehensive analysis of his competitor.

This example is based on a GSM network, but could be extended to other technologies provided there are a sufficient number of information elements from the activities of roamers within a foreign network. The Visited VLR 520 could belong to a partner PLMN, and in such a case part of the information elements could be available both on the home network as well as the visited network. Home network information elements provided a deeper view, which is useful for a partner PLMN located in the visited country. For instance, moving to a competitor of the visited PLMN, that is to another operator in the same country, generates information elements available only on a home network level. Thus, the partner PLMN could obtain precise information on both his network and his competitor. Additionally, it becomes possible to aggregate the information elements from different home networks according to the visited network element, thereby increasing accuracy.

### Performance management

Performance management information could be obtained from various ones of the billing, core or access information elements. Performance may include anticipating and detecting faults with network elements by measuring deviation from standard SS7 activity. For instance, a low level of SS7 signalling following a previous long term higher level could mean that there is a fault in one part of the communication chain. Furthermore, by comparing and adding core and access information elements for one communication, it might be possible to detect the faulty domain or network. One application of performance management could be the detection of coverage problems. Intra-domain correlation is used in this case to follow a subscriber before, during and after a communication, associated information elements collected from one or more networks provides valuable information concerning these networks.

### Testing of roaming agreements and end to end validation

Using controlled communications generated by robots it is possible to correlate several information elements from different domains to test new roaming agreements. Information elements obtained from different networks could be used to troubleshoot the monitored networks.

Various modifications of the embodiments herein before described may be made without departing from the scope of the present invention.

## Claims

1. A data processing apparatus operable to evaluate an inter-mobile network performance of a plurality of mobile access networks, the plurality of mobile access networks including a home mobile access network and a visited mobile access network to which mobile subscribers may attach, the data processing apparatus being operable
to receive signalling messages communicated between network components of the plurality of mobile radio networks in association with a communications session involving the mobile subscriber, the signalling messages being generated in accordance with a signalling event associated with the communications session and comprising one of
billing information elements associated with generating a charge to the mobile subscriber for the communications session,
access information elements communicated between access network components of the mobile access network, and
core information elements associated with the core network components of the mobile access network, and the data processing apparatus is operable
to correlate selectively one of the billing information elements, the access information elements or the core information elements, to evaluate the inter-mobile access network performance in accordance with a result of the correlation.

2. A data processing apparatus as claimed in Claim 1, wherein the billing information elements include
transferred account procedure messages providing data for billing the communications session to the home mobile access network, and
resource information messages indicating an amount of communications resources used on one or more of the mobile radio networks, an identifier of the mobile subscriber which has used the communications resources, and an indication of the relative cost of the communications resources used, the data processing apparatus being operable
to correlate the transferred account procedure messages with the resource information messages to confirm that the billing information indicating the amount of the charge to the identified mobile subscriber for the communications session indicated by the transferred account procedure messages is correct with respect to that represented to the resource information messages.

3. A data processing apparatus according to claim 1 or 2, wherein the transferred account procedure messages are generated by a data clearing house.

4. A data processing apparatus as claimed in Claim 1, wherein the data processing apparatus is operable to determine whether there is a fault with one or more of the core network components or the access network components by correlating the signalling messages of the core network elements and the access network elements.

5. A data processing apparatus as claimed in Claim 1, wherein the mobile subscriber is a first mobile subscriber attached to a first visited network, and the core information elements and the access information elements are generated for a communications session initiated between a mobile subscriber which has roamed to the visited mobile network and a second mobile subscriber which is attached to a second visited network, the data processing apparatus being operable
to correlate the core network information elements generated from the components of the visited mobile network to which the first mobile subscriber is attached with the core network elements generated by the core network information elements of the second visited network to which the second mobile subscriber is attached, to evaluate an end to end integrity of the communications session.

6. A data processing apparatus as claimed in any preceding claim, wherein the core network information elements and the access network information elements are generated in accordance with an SS7 signalling protocol.

7. A data processing apparatus as claimed in any preceding Claim, wherein the mobile subscriber is a mobile subscriber simulator operable to generate signalling event in accordance with predetermined rules to evaluate the inter-mobile network performance.

8. A system comprising a data processing apparatus operable in association with a plurality of mobile access networks to provide an inter-mobile access network performance evaluation and a mobile subscriber simulator, wherein the plurality of mobile access networks includes a home mobile access network and a visited mobile access network to which mobile subscribers may attach, the data processing apparatus being operable
to receive signalling messages communicated between network components of the plurality of mobile radio networks in association with a communications session simulated by the mobile subscriber simulator, the signalling messages being generated in accordance with a signalling event associated with the communications session and comprising one of
billing information elements associated with generating a charge to the mobile subscriber simulator for the communications session,
access information elements communicated between access network components of the mobile access network, and
core information elements associated with the core network components of the mobile access network, and the data processing apparatus is operable
to correlate selectively one of the billing information elements, the access information elements or the core information elements, to evaluate the inter-mobile access network performance in accordance with a result of the correlation.

9. A method of evaluating an inter-mobile network performance of a plurality of mobile access networks, the plurality of mobile access networks including a home mobile access network and a visited mobile access network to which mobile subscribers may attach, the method comprising
receiving signalling messages communicated between network components of the plurality of mobile radio networks in association with a communications session involving the mobile subscriber, the signalling messages being generated in accordance with a signalling event associated with the communications session and comprising one of
billing information elements associated with generating a charge to the mobile subscriber for the communications session,
access information elements communicated between access network components of the mobile access network, and
core information elements associated with the core network components of the mobile access network, and the method comprises
correlating selectively one of the billing information elements, the access information elements or the core information elements, to evaluate the inter-mobile access network performance in accordance with a result of the correlation.

10. A method as claimed in Claim 9, wherein the billing information elements include
transferred account procedure messages providing data for billing the communications session to the home mobile access network, and
resource information messages indicating an amount of communications resources used on one or more of the mobile radio networks, an identifier of the mobile subscriber which has used the communications resources, and an indication of the relative cost of the communications resources used, the method comprising
correlating the transferred account procedure messages with the resource information messages to confirm that the billing information indicating the amount of the charge to the identified mobile subscriber for the communications session indicated by the transferred account procedure messages is correct with respect to that represented to the resource information messages.

11. A computer program providing computer executable instructions which when loaded onto a computer causes the computer to perform the method according to Claims 9 or 10.

12. A data carrier having a recording medium, the recording medium having recorded thereon a computer program according to Claim 11.

13. A signal representing the computer program according to Claim 12.

14. A data processing apparatus for evaluating an inter-mobile access network performance, substantially as herein before described with reference to the accompanying drawings.
